# EUROPEAN PATENT APPLICATION

(11) **EP 1 902 975 A1**
(43) Date of publication of application: **26.03.2008**
(21) Application number: 06425649.8
(22) Date of filing: 22.09.2006
(51) Int. Cl.: B65D 88/06, B65D 90/02

(54) **A series of modular elements for forming a self-supporting waste liquid tray, and a process for assembly thereof**

(71) Applicant: Ecologia Soluzione Ambiente S.p.A., 42021 Bibbiano RE (IT)
(72) Inventor: Benedetti, Enrico, 42029 Sant'Ilario D'Enza (RE) (IT)
(74) Representative: Gotra, Stefano

(57) **Abstract**

A series of modular elements (3,16,20,21) each exhibit a flanged peripheral flank 4 for facilitating a side-by-side arrangement of the modular elements, and a housing (12) for facilitating a centring of the modular elements during positioning thereof. Centring bodies (7), means for connecting (6) and an adhesive (8) are used to assemble the modular elements (3,16,20,21) to form a plurality of self-supporting trays (1, 1',1",1"',1"") for treating liquids. A process for assembling the plurality of self-supporting trays (1, 1',1 ",1 "',1 "") includes a stage of fixing the centring bodies (7) on a horizontal plane, a stage of nearing the series of modular elements (3,16,20,21), a stage of blocking the elements together using the means for connecting (6) and a stage of sealing the elements using the adhesive (8).

## Description

The device relates in particular to the field of purification treatment of civil and waste waters.

By treatment of waste, a purification cycle is intended, defined by one or more procedural stages according to the type of water to be treated.

The procedural stages include mechanical, biological, chemical-physical and sludge treatments.

By mechanical treatment, elimination of solid substances from urban waste water is meant, which flow into the tray.

The term biological refers to elimination of organic and inorganic substances from the waste water, which substances may be assimilated aerobically and/or anaerobically by bacteria and micro-organisms in the ecosystem.

The term chemical-physical is used to indicate removal from the biologically-treated waters of colloids and residual suspensions, part of the non-biodegradable substances, and residual micro-organisms.

The term sludge treatment is used to indicate elimination of the micro-organisms that have grown following metabolism of the organic substances.

The prior art includes, generally speaking, two types of trays used for treatment of waste.

A first type of tray, interred and which cannot be stepped upon, also the most commonly found, is defined by a box-type body which is superiorly open.

The installation of this tray requires digging a ditch, generally parallelepiped, internally of which cement is dropped to form the tray.

These trays, which can perform any of the above-described treatments, has the disadvantage that it has to be located in isolated places, or places with a low population density.

Their "open" form means that they cannot be used very close to inhabited zones, or industrial areas, for obvious reasons connected with their environmental impact, such as for example the smell they emit or the proliferation of animals there-about, as well as the safety risk they constitute.

At present their use is mainly in open countryside, such as civil and industrial waste receiving stations.

In order to be sufficient to serve the high number of users, very voluminous trays are designed, which occupy vast surfaces and therefore occupy considerable cultivatable areas of countryside.

Because of their size, these types of tray are also disadvantageously complex to design, as well as expensive to construct.

The design complexity is due to the design specifications; types of water to be treated, particularity of the terrain and the location, which often lead to the need to construct trays which are different to one another.

The high costs are due to the need to install a construction site with specialised personnel, with time lost waiting for the cement to harden, for testing and control of the design project calculations.

A second type of interred tray, less used than the one described above, is defined by a closed box body exhibiting one or more inspection hatches at ground level.

This compact type of tray is suitable for small volumes of water and is usually used in industrial plants for purification of water circulating in the production department concerned, or in the gardens of private dwelling for purification of waste water.

These trays are realised in a closed single body made of plastic, such as for example fibreglass, and is made by press-forming.

Once the ditch has been dug, the tray is located and after connecting up with the discharge and recycling ducts the ditch is covered over once more, leaving an access for maintenance and inspection work.

Each producing company only offers a small range of tray models, which are of equal shape and differently-sized, each of which models is suitable for, for example, a civil use or a small-to-medium industrial application, or maybe a medium-to-large industrial application.

The volumes of these trays are smaller than the first-described type, but are still quite considerable.

The transport of these trays, which is done by road (either by convoy or by special large vehicle transport) from the production plant to the location, is both difficult and influences the final cost of the tray.

It may even happen that some geographical locations are impossible for these convoys or wide-load vehicles to access.

It might also occur that the location can be reached, but the trays arrive in a damaged state due to vibrations or obstacles encountered during transport.

Finally, the small range of models on offer leads to poor design flexibility.

In a case where the volume required by the designer is greater than the single-piece trays, the designer is obliged to over-size the structure, by locating two or more structures in series or in parallel.

This circumstance leads to a higher installation and maintenance cost, as well as greater occupation of land and more difficult management of operations.

The main aim of the present invention is to provide a series of modular elements which make the design project for a tray for waste liquid treatment more flexible.

A second aim of the invention is to provide a series of modular elements which are in fact a small number of basic elements that are, however, able to realise a wide sweep of waste-liquid tray sizes.

A further aim of the invention is to provide a series of modular elements for forming a self-supporting tray for waste water treatment, which modular elements are easy to transport.

A further aim of the present invention is to provide an assembly process for the tray which is easy to actuate.

A further aim of the present assembly process is to realise a procedure for assembly the tray which is standardised and which does not require the intervention of specialised personnel.

These aims and advantages and more besides are all attained by the invention as it is characterised in the appended claims.

Further aims and advantages of the present invention will emerge from the detailed description that follows of a preferred embodiment thereof, illustrated by way of non-limiting example in the accompanying figures of the drawings, in which:
figure 1 is a perspective view of a first modular element for the formation of a self-supporting tray for treatment of waste liquid;
figure 2 is a perspective view of a second modular element, cooperating with the first element, for the formation of a self-supporting tray for treatment of waste liquid;
figures 3 and 4 are perspective views respectively of a third and a fourth modular elements, cooperating with the preceding elements, for the formation of a self-supporting tray for treatment of waste liquid;
figure 5 is a perspective view of a construction detail for facilitating the laying of the elements illustrated in the preceding figures;
figure 6 is a perspective view of a first embodiment of a self supporting tray for treatment of liquids without a first modular element;
figure 7 is a perspective view of a second embodiment of a self-supporting tray for treatment of liquids without a first modular element;
figure 8 is a perspective view of a third embodiment of a self-supporting tray for treatment of liquids without two second modular elements;
figure 9 is a perspective view of a fourth embodiment of a self supporting tray for treatment of liquids;
figure 10 is a perspective view of a fifth embodiment of a self-supporting tray for treatment of liquids.

With reference to the figures, 1, 1', 1", 1 "', 1 "" denote self-supporting trays for treatment of waste water, obtained from a modular combination of a series of modular elements denoted respectively by numbers 3, 16, 20, 21.

3 denotes a modular shell exhibiting a flanged peripheral edge 4 entirely bordering the shell 3.

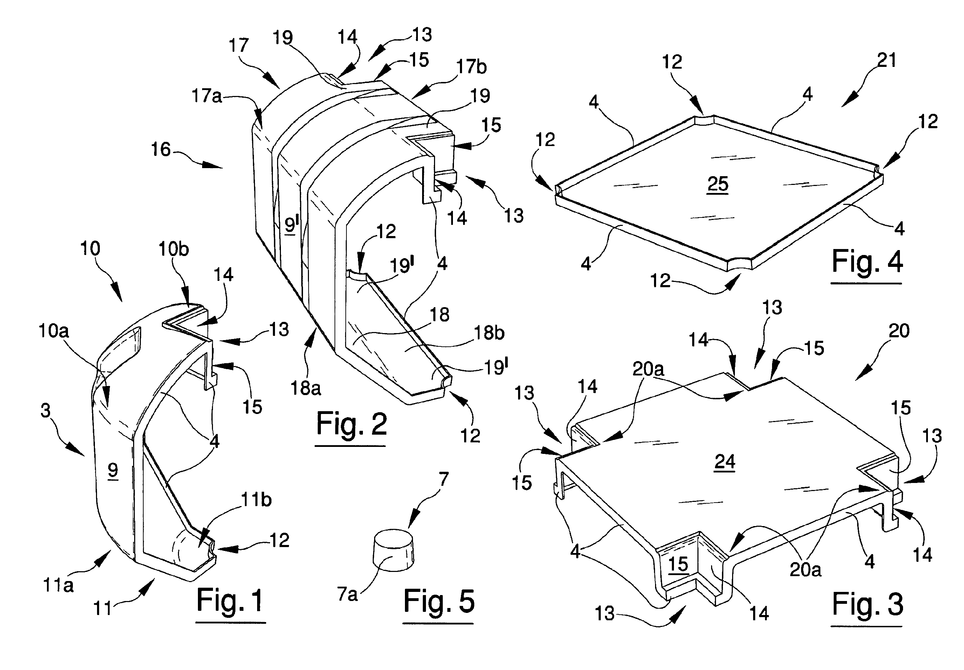

As visible in figure 1, the peripheral edge 4 of the shell 3 is folded internalwise thereof to form a striker flange for conjoining with other modular elements.

The modular shell 3 exhibits a lateral flank 9 having a transversal development which is curved in an arc of circumference.

An upper part 10 develops above the lateral flank 9, while a lower part 11 develops inferiorly of the flank 9.

The upper part 10, preferably spherical, exhibits a base 10a which is inferiorly connected to the lateral flank 9, and an apex 10b which faces internally of the lateral flank 9.

A recess 13 is afforded at the apex 10b, for receiving means for water treatment which will be more fully described herein below.

The recess 13 is defined by two panels 14, 15 which are perpendicular to one another and which wedge internally of the upper part 10 and which develop below the apex 10b.

The lower part 11, preferably truncoconical, exhibits an upper side 11a connected to the lateral flank 9 and a lower side 11 b developing towards the inside of the lateral flank 9 and terminating in a housing 12.

The housing 12 is shaped in an arc of circumference.

Figure 2 illustrates a second modular element, having a modular wall 16 exhibiting a flanged peripheral edge internally surrounding the wall 16.

Similarly to the modular shell 3, the peripheral edge 4 of the modular wall 16 is bent inwards on itself to form a striker flange for nearing to a shell 3 or other modular wall 16.

The modular wall 16 exhibits a lateral flank 9' which is linear in transversal section.

An upper cylindrical lip 17 develops superiorly of the lateral flank 9', while a concave lower portion 18 develops inferiorly thereof.

The upper cylindrical lip 17 exhibits a base 17a which is inferiorly connected to the lateral flank 9' and a top 17b which terminates in a pair of vertices 19, each of which curves inwardly of the lateral flank 9'.

A recess 13 is afforded at each vertex 19 of the top 17b, which recess 13 is for receiving means for water treatment which will be better described herein below.

The recess 13 is defined by two panels 14, 15 which are perpendicular to one another and which wedge internally of the upper cylindrical lip 17, and which develop below the top 17b.

The lower concave portion 18 exhibits an upper side 18a which is connected to the lateral flank 9' and a lower side 18b which terminates in a second pair of vertices 19', each facing internally of the lateral flank 9' and terminating in a housing 12.

The housing 12 is shaped as an arc of circumference.

Figure 3 illustrated a third modular element which is a cover 20, exhibiting a flanged peripheral edge 4 internally surrounding the cover 20.

Similarly to the modular shell 3 and the modular wall 16, the peripheral edge 4 of the cover 20 is curved inwardly thereof to form a striker flange for nearing to a shell 3 and/or a modular wall 16 and/or another cover 20. The cover 20 is defined by a sheet-like body 24 having a quadrangular perimeter, provided with four vertices 20a on each of which a recess 13 is afforded for receiving means for water treatment, which will be more fully described herein below.

The recess 13 is defined by two panels 14, 15, which are perpendicular to one another and which wedge internally of the lid 20 and which develop below the respective vertex 20a.

Figure 4 illustrates a fourth modular element defined by a bottom 21, exhibiting a peripheral edge 4 which is flanged and which entirely surrounds the bottom 21.

Similarly to the modular shell 3, the modular wall 16 and the cover 20, the peripheral edge 4 of the bottom 21 is curved inwardly thereof to form a striker flange for nearing to a modular shell 3 and/or a modular wall 16 and/or another bottom 21.

The bottom 21 is defined by a sheet-like body 25 having a quadrangular perimeter, provided with four curved sides to form a peripheral edge and four vertices 20a all terminating in a housing 12.

The housing 12 is shaped in an arc of circumference.

figure 5 illustrates a centring body 7, preferably a cylindrical body, exhibiting a lateral surface 7 located in contact with the housings 12 in order to facilitate, during formation of the self-supporting tray 1,1', 1",1"',1"", the nearing to one another of the modular elements 3,16,20,21.

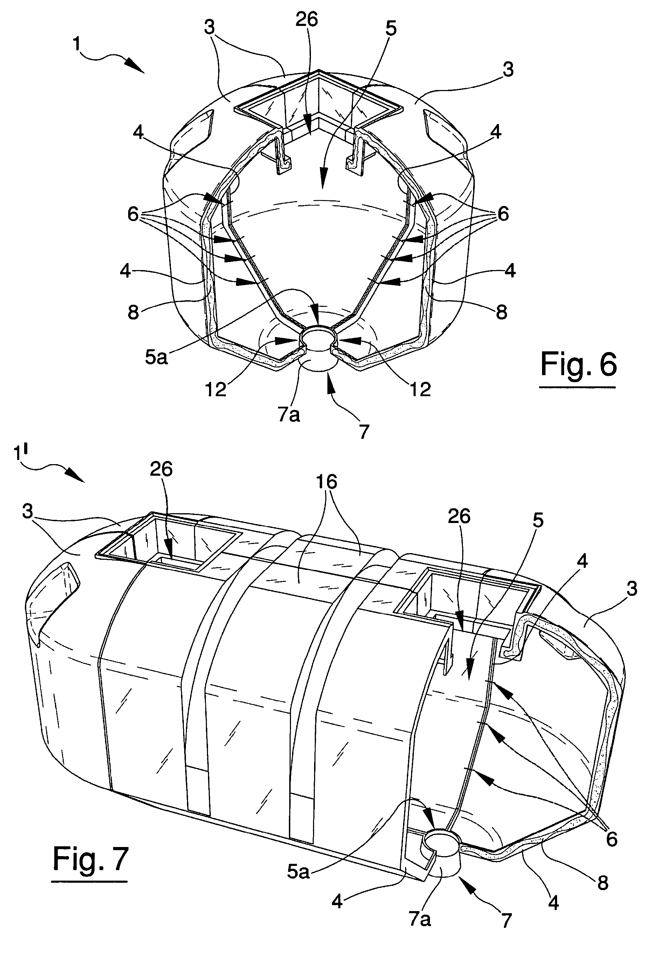

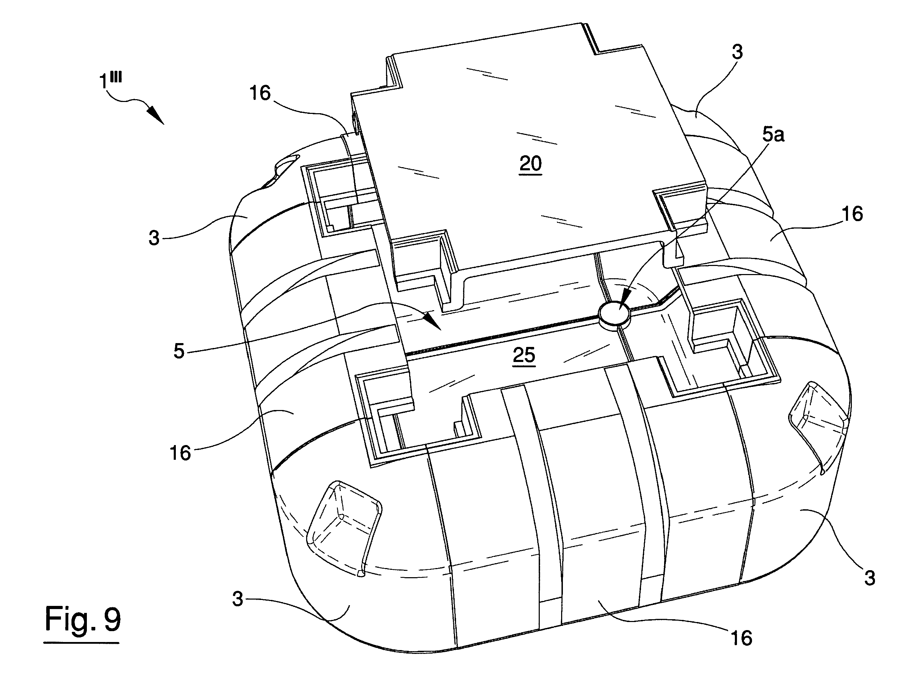

Figure 6 illustrates a first embodiment of a self-supporting tray for treatment of waste water.

The tray 1' is composed by nearing a plurality of modular shells 3 to form a volume 5 inferiorly provided with at least an opening 5a.

The opening 5a, substantially circular in shape, is obtained by nearing four housings 12 to each other, each of which housings 12 belongs to a respective modular shell 3.

At the position of the opening is the centring body 7, having a lateral profile 7a thereof in contact with the housings 12, in order to facilitate the nearing of the plurality of modular shells 3 and to sealedly close the opening 5 a of the volume 5 using adhesives 8.

The adhesives 8 can be, in a preferred but not exclusive embodiment, a silicon paste.

Means for connecting 6 are applied at the peripheral borders 4 of the modular shells 3 in order to facilitate mechanical connection of the modular shells 3.

Figure 7 illustrates a second embodiment of a self-supporting tray 1' for treatment of waste.

The tray 1' is composed by nearing four modular shells 3 and two modular walls 16 forming a volume inferiorly affording two openings 5a (of which only one is visible in figure 7).

In more detail, the modular shells 3 are located in pairs, two at the ends of the tray 1', and the modular walls 16, arranged in specular fashion, are interpositioned between the pairs of modular shells 3.

The openings 5a, substantially circular in shape, are obtained by nearing two housings 12 belonging to the pair of modular shells 3, and two housings 12, belonging to a side of the pair of walls 16 facing one another.

At the openings are positioned two centring bodies 7, each exhibiting a lateral profile 7a which is in contact with the housings 12, to favour the nearing of the four modular shells 3 and the two modular walls 16 and to sealedly close the openings 5a of the volume 5 by means of adhesive 8.

Means for connecting are applied at the peripheral borders 4 of the modular shells 3 and the modular walls 16 to facilitate mechanical connection of the plurality of modular elements 3, 16.

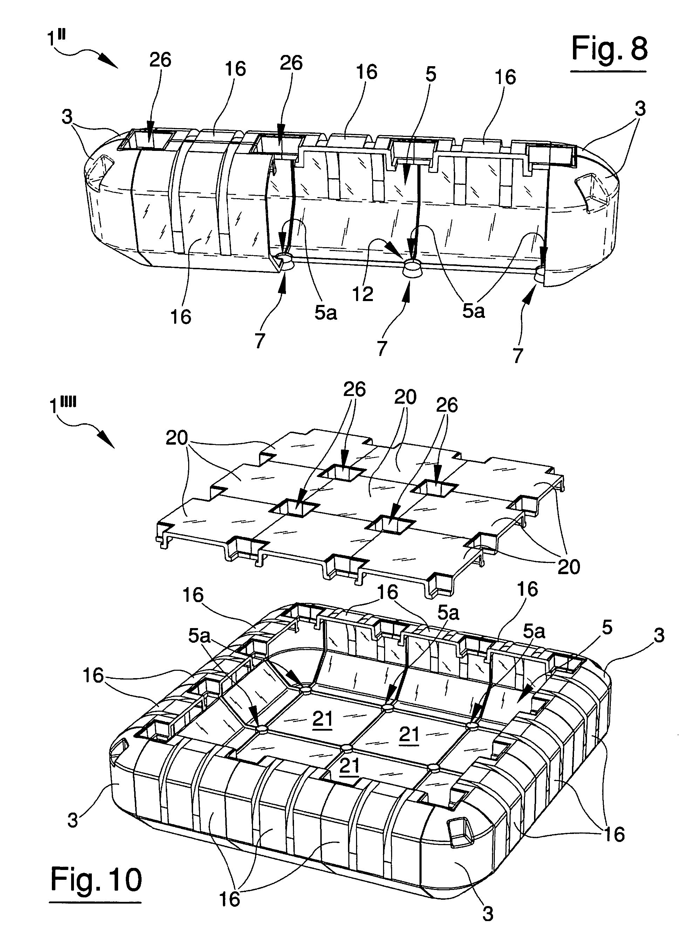

Figure 8 illustrates a third embodiment of a self-supporting tray 1" for treatment of waste waters.

The tray 1" is composed by nearing four modular shells 3 and a plurality of modular walls 16 forming a volume inferiorly affording at least three openings 5a.

In more detail, the modular shells 3 are located in pairs, two at the ends of the tray 1 ", and the modular walls 16, arranged in specular fashion, are interpositioned between the pairs of modular shells 3.

The openings 5a, substantially circular in shape, are obtained by nearing two housings 12 belonging to the pair of modular shells 3, and two housings 12, belonging to a side of the pair of walls 16 facing one another, or are alternatively obtained by nearing four housings 12 belonging to four contiguous modular walls 16.

At least three centring bodies 7 are positioned at the openings, each exhibiting a lateral profile 7a which is in contact with the housings 12, to favour the nearing of the four modular shells 3 and the plurlaity of modular walls 16 and to sealedly close the openings 5a of the volume 5 by means of adhesive 8.

Means for connecting are applied at the peripheral borders 4 of the modular shells 3 and the modular walls 16 to facilitate mechanical connection of the plurality of modular elements 3, 16.

Figure 9 illustrates a fourth embodiment of a self-supporting tray 1"' for treatment of waste waters.

The tray 1"' is composed by nearing a bottom 21 and a cover 20 to four modular shells 3 and four modular walls 16 forming a volume 5 inferiorly affording four openings 5a (of which only one is visible in figure 9).

In more detail, the bottom 21 is opposite the cover 20, with the four modular walls 16 and the four modular shells 3 drawn up thereto.

The modular shells 3 are placed at the vertices of the tray 1"' and the four modular walls 16, specularly facing one another in pairs, are each placed in contact between two modular shells 3.

Each opening 5a, basically circular in shape, is obtained by placing a modular shell 3, two non-facing modular walls 16 and a vertex belonging to the bottom 21 together.

Four centring bodies 7 are positioned at the openings, each exhibiting a lateral profile 7a which is in contact with the housings 12, to favour the nearing of the four modular shells 3, the plurality of modular walls 16 and the bottom 21, and to sealedly close the openings 5a of the volume 5 by means of adhesive 8.

Means for connecting are applied at the peripheral borders 4 of the modular shells 3, the modular walls 16, the bottom 21 and the cover 20 to facilitate mechanical connection of the plurality of modular elements 3, 16.

Figure 10 illustrates a fifth embodiment of a self-supporting tray 1 "" for treatment of waste waters.

The tray 1 "" is composed by nearing a plurality of bottoms 21 and a cover 20 to four modular shells 3 and a plurality of modular walls 16, all closed off by a plurality of covers 20 forming a volume 5 inferiorly affording a plurality of openings 5a.

In more detail, the plurality of bottoms 21, each opposite a respective cover 20, is arranged in such a way as to form a quadrangular border, each bottom 21 being side-by-side to a modular wall 16 and three bottoms 21, or to a pair of modular walls 16 and a couple of bottoms 21 or four bottoms 21.

The modular shells 3 are placed at the vertices of the tray 1 "" and plurality of modular walls 16 is arranged in such a way that each wall 16 is interpositioned between a pair of modular walls 16 or between a modular wall 16 and a modular shell 3.

Each opening 5 a, basically circular in shape, is obtained by placing a modular shell 3, two non-facing modular walls 16 and a vertex belonging to the bottom 21 together, or by placing two non-facing and contiguous modular walls 16 and two vertices belonging to two contiguous bottoms 21 together, or placing four contiguous bottoms 21 together.

The plurality of openings 5a is engaged to a corresponding plurality of centring bodies 7, each having a lateral profile 7 thereof in contact with the housings 12, in order to facilitate the nearing of the four modular shells 3, the plurality of modular walls 16 and the plurality of bottoms 21, and in order to sealedly close the openings 5a of the volume 5 by means of an adhesive 8.

Means for connecting 6 are applied at the peripheral borders 4 of the modular shells 3, the modular walls 16, the bottom 21 and the cover 20 to facilitate mechanical connection of the plurality of modular elements 3, 16, 20,21.

As can be seen in figures 7-9, the presence of the recesses 13 on the modular shell 3, the modular wall 16 and the cover 20 enable a formation, once the tray 1-1"" is assembled, of at least a hole 26 for receiving means for treating.

The means for treating can be defined as blower tubes or turbines.

The designer, according to the type of treatment that is to be performed on the waste waters, will find the housings for the means for treating considered necessary and the relative control of the operative data relating to the plant already there.

The assembly process 1 of the self-supporting tray 1 for treating waste water realised in the first embodiment, with the plurality of modular shells 3, is the following.

First a centring body 7 is taken and fixed on a horizontal plane, where horizontal plane means the bottom of a previously-dug ditch.

The four modular shells 3 are brought together, placing the housings 12 in striking position on the lateral profile 7a of the centring body 7 and the respective peripheral borders 4 in reciprocal contact.

The modular shells 3 are then blocked together, applying the means for connecting 6 at the peripheral borders 4.

The tray 1 is sealed by applying internally of the volume 5 an adhesive 8 at the lateral profile 7a and at the peripheral borders 4 of the modular shells 3.

The assembly process of a self-supporting tray 1' for treating waste water of the second embodiment through the combination of four modular shells 3 and two modular walls 16 is the following.

Two centring bodies 7 are fixed on a horizontal plane, placing them on a line and at a distance which is equal to the lateral flank 9' of the modular wall 16.

Four modular shells 3 and two modular walls 16 are conjoined to make the volume 5, arranging pairs of modular shells 3 and the two opposite modular walls 16 central of the relative pairs of modular shells 3, with the respective housings 12 striking on the corresponding lateral profiles 7a of the two centring bodies 7 and the respective contacting peripheral borders 4.

The modular elements 3, 16 are blocked, applying the means for connecting 6 at the peripheral borders 4.

The tray 1' is sealed by applying, internally of the volume 5, an adhesive 8 at the lateral profile 7a and at the peripheral borders 4 of the modular elements 3, 16.

The assembly process of a self-supporting tray 1" for treating waste water of the third embodiment through the combination of four modular shells 3 and a plurality of modular walls 16 is the substantially the same as the preceding process.

The assembly process of a self-supporting tray 1" for treating waste water of the fourth embodiment through the combination of four modular shells 3, four modular walls 16, a cover 20 and a bottom 21 and two modular walls 16 is the following.

A bottom 21 is rested on a horizontal plane.

Four centring bodies 7 are fixed at each of the vertices 24 of the bottom 21.

Four modular shells 3 and four modular walls 16 are conjoined to make the volume 5, alternating a modular shell 3 and a modular wall 16, with the respective housings 12 striking on the corresponding lateral profiles 7a of the four centring bodies 7 and the respective contacting peripheral borders 4.

The tray 1 "' is closed superiorly by resting the cover 20 thereon.

The modular elements 3, 16, 20, 21 are blocked by applying the means for connecting 6 at the peripheral borders 4 thereof.

The tray 1"" is sealed by applying, internally of the volume 5, an adhesive 8 at the lateral profile 7a and at the peripheral borders 4 of the modular elements 3, 16,20,21.

The assembly process of a self-supporting tray 1" for treating waste water of the fifth embodiment through the combination of four modular shells 3, four modular walls 16, a plurality of covers 20 and a plurality of bottoms 21 is the following.

A plurality of bottoms 21 is rested on a horizontal plane forming a quadrangular shape.

Four centring bodies 7 are fixed at each of the vertices 24 of each of the bottoms 21 used.

Four modular shells 3 and a plurality of modular walls 16 are conjoined to make the volume 5, arranging the modular shells at the vertices of the quadrangular border and the lateal walls 14 internally of the modular shells 3; the respective housings 12 are placed striking on the corresponding lateral profiles 7a of the four centring bodies 7 and the respective contacting peripheral borders 4.

The tray 1"" is closed superiorly by resting the plurality of covers 20 (which are the same in number as the bottoms 21) thereon.

The modular elements 3, 16, 20, 21 are blocked by applying the means for connecting 6 at the peripheral borders 4 thereof.

The tray 1"" is sealed by applying, internally of the volume 5, an adhesive 8 at the lateral profile 7a and at the peripheral borders 4 of the modular elements 3, 16,20,21.

A further advantage of this series of elements for the formation of a tray for treatment of waste waters is that plants can be developed in length and breadth.

If an installed tray 1' is to be developed in size, for example as in the second embodiment, it will be sufficient to increase the ditch housing the tray, disassemble two lateral shells 3 and inter-position two modular walls 16.

If the tray is to be moved, it can be disassembled and all the modular elements can be re-utilised.

## Claims

1. A series of modular elements for forming a self-supporting waste liquid tray (1,1',1",1"',1"") for the treatment of waste water, **characterised in that** it comprises a modular shell (3), exhibiting a flanged peripheral border (4) surrounding the modular shell (3), the modular shell (3) being defined by:
a lateral flank (9), preferably having a curved transversal section;
an upper part (10), preferably spherical, exhibiting a base (10a) thereof which is inferiorly connected to the lateral flank (9) and an apex (10b) thereof which faces inwardly of the lateral flank (9);
a lower part (11), preferably truncoconical, exhibiting an upper side (11 a) which is connected to the lateral flank (9) and a lower side (11b) which faces inwardly of the lateral flank (9), which lower part (11) terminates in a housing (12).

2. The series of modular elements for forming a self-supporting waste liquid tray (1,1',1",1"',1"") for the treatment of waste water of claim 1, **characterised in that** the modular shell (3) exhibits at the apex thereof (10b) a recess (13) for receiving means for treating water.

3. The self-supporting tray for treatment of water of claim 1, **characterised in that** the tray comprises:
a first plurality of modular shells (3) which are placed side-by-side in order to define a volume (5) inferiorly provided with at least an opening (5a);
means for connecting (6) applied at the peripheral border (4) for facilitating a mechanical connection of the plurality of modular shells (3);
at least a centring body (7) exhibiting a lateral profile (7a) located in contact with the housing (12) in order to facilitate a side-by-side positioning of the plurality of modular shells (3), sealingly closing the opening (5a) of the volume (5) using an adhesive (8).

4. The self-supporting tray for treatment of water of claim 3, **characterised in that** the housing (12) is shaped as an arc of circumference.

5. The self-supporting tray for treatment of water of claim 4, **characterised in that** the centring body (7) is a substantially cylindrical body.

6. The series of modular elements for forming the self-supporting waste liquid tray (1,1',1",1"',1"") of claim 1, **characterised in that** it further comprises a modular wall (16), exhibiting a flanged peripheral border (3) surrounding the modular wall (16), which modular wall (16) faces a like modular wall (16) located between two modular shells (3), or between a modular shell (3) and a modular wall (16), the modular wall (16) comprising:
a lateral flank (9'), preferably having a linear transversal section;
a cylindrical upper lip (17) exhibiting a base (17a) which is inferiorly connected to the lateral flank (9') and a top (17b) terminating in a first pair of vertices (19) facing towards an inside of the lateral flank (9');
a concave lower portion (18) exhibiting an upper side (18a) which is connected to the lateral flank (9') and a lower side (18b) which terminates with a second pair of vertices (19'), each of which vertices (19') faces inwardly of the lateral flank (9') and terminates in a housing (12).

7. The self-supporting tray for treatment of water of claim 6, **characterised in that** the modular wall (16) exhibits a recess (13) at each vertex (19) of the top (17b), which recess (13) receives means for treating water.

8. The self-supporting tray for treatment of water of claim 6, **characterised in that** it comprises:
four modular shells (3) located in pairs at ends of the tray (1');
two modular walls (16) facing one another, each interpositioned between pairs of modular shells (3), defining, together with the four modular shells (3), a volume (5) inferiorly exhibiting two openings (5a);
means for connecting (6), applied at the peripheral flank (4) of the modular shells (3) and the modular walls (16), for facilitating mechanical connection of the plurlaity of modular elements;
two centring bodies (7), each exhibiting a lateral profile (7a), placed in contact with the housings (12) for facilitating side-by-side positioning of the modular elements (3, 16), sealingly closing the openings (5a) of the volume (5) by use of an adhesive (8).

9. The self-supporting tray for treatment of water of claim 6, **characterised in that** it comprises:
four modular cells (3) placed in pairs at the lateral margins of the tray (1");
a plurality of modular walls (16), of which at least four are placed in pairs in contact with the respective pairs of modular shells (3), defining together with the four modular shells (3) a volume (5) inferiorly exhibiting at least three openings (5a);
means for connecting (6), applied at the peripheral border (4) of the modular shells (3) and the modular walls (16), to facilitate the mechanical connection of the plurality of modular elements;
at least three centring bodies (7), each exhibiting a lateral profile (7a) which is placed in contact with the housings (12) for facilitating the side-by-side placing of the modular elements (3, 16), sealingly closing the openings (5a) of the volume (5) by means of an adhesive (8).

10. The series of modular elements for forming the self-supporting waste liquid tray (1,1',1",1"',1"") of claim 6, **characterised in that** it further comprises:
a cover (20), exhibiting a peripheral border (4) which is flanged and surrounds the cover (20), comprising a sheet body (24) having a quadrangular perimeter and exhibiting four vertices, each of which vertices exhibits a recess (13), which recess (13) develops below the sheet body (24) for receiving means for treating water;
a bottom (21), exhibiting a peripheral border (4) which is flanged and which surrounds the bottom (21), comprising a sheet (25) having a quadrangular perimeter and exhibiting curved sides in order to for the peripheral border (4) and having vertices which each terminate in a seating (12):

11. The self-supporting tray for treatment of water of claim 10, **characterised in that** it comprises:
four modular shells (3) located at vertices of the tray (1"');
four modular walls (16), positioned in couples facing one another, each couple being placed in contact with and between two modular shells (3);
a cover (20) superiorly closing the tray (1"');
a bottom (21) opposite the cover (20) and surrounded by the four modular walls (16) and the four modular shells (3) in order to define a volume (5) inferiorly exhibiting four openings (5a);
means for connecting (6), applied at the peripheral border (4) of the modular shells (3), at the modular walls (16), at the cover (20) and at the bottom (21) for facilitating mechanical connection of the plurality of modular elements;
four centring bodies (7), each exhibiting a lateral profile (7a) placed in contact with the housings (12) to facilitate positioning of the modular elements (3,16,20,21), sealedly closing the openings (5a) of the volume (5) by means of an adhesive (8).

12. The self-supporting tray for treatment of water of claim 10, **characterised in that** it comprises:
four modular shells (3) placed at the vertices of the tray (1"");
a plurality of modular walls (16), placed in pairs and located one pair opposite another, each pair being interpositioned between a pair of modular walls (16) or between a modular wall (16) and a modular shell (3);
a plurality of covers (20) superiorly closing the tray (1"");
a plurality of bottoms (21), each positioned opposite a respective modular cover (20), connected to a modular wall (16) and three contiguous bottoms (21), or to a pair of modular walls (16) and a pair of continguous bottoms (21), or to four contiguous bottoms (21), in order to define a volume (5) inferiorly exhibiting a plurality of openings (5a);
means for connecting (6), applied at the peripheral border (4) of the modular shells (3), of the modular walls (16), of the cover (20) and
the bottom (21) to facilitate mechanical connectin of the plurality of modular elements;
a plurality of centring bodies (7), each exhibiting a lateral profile (7a) positioned in contact with the housings (12) in order to facilitate connecting of the modular elements (3,16,20,21), sealingly closing the openings (5a) of the volume (5) with adhesive (8).

13. An assembly process of a self-supporting modular tray as in claims from 1 to 6, **characterised in that** it comprises following stages:
fixing the centring body (7) on a horizontal plane;
bringing four modular shells (3) side-to-side to define the volume (5), placing the housings (12) striking against the lateral profile (7a) of the centring body (7) and the respective peripheral borders (4) in reciprocal contact;
blocking the modular shells (3) by applying the means for connecting at the peripheral borders (4);
sealing the tray (1) by applying, internally of the volume (5), an adhesive (8) at the latera profile (7a) and at the peripheral borders (4) of the modular shells (3).

14. The assembly process of a self-supporting modular tray of claims from 1 to 9, **characterised in that** it comprises following stages:
fixing at least two centring bodies (7) on a horizontal plane, positioning the bodies (7) on a straight line and at a distance which is equal to a breadth of the lateral flank (9') of the modular wall (16);
positioning four modular shells (3) and two modular walls (16) together to create the volume (5), arranging the modular shells (3) in pairs and the modular walls (16) in opposite positions and in a central position between respective pairs of modular shells (3), placing the respective housings (12) against the corresponding lateral profiles (7a) of the two centring bodies (7) and the respective peripheral borders (4) in contact;
blocking the modular elements (3, 16) by applying the means for connecting (6) at the peripheral borders (4);
sealing the tray (1',1") by applying, internally of the volume (5), an adhesive (8) at the lateral profile (7a) and at the peripheral borders (4) of the modular elements (3, 16).

15. The assembly process of a modular self-supporting tray of claims from 1 to 11, **characterised in that** it comprises following stages:
resting a bottom (21) on a horizontal plane;
ixing four centring bodies (7) at vertices of the bottom (21);
bringing four modular shells (3) and four modular walls (16) side-by-side to to define the volume (5), alternating a modular shell (3) with a modular wall (16), positioning the respective housings (12) strikingly on the corresponding lateral profiles (7a) of the four centring bodies (7) and the respective peripheral borders (4) in contact;
superiorly closing the tray (1'") by placing the cover (20) thereon;
blocking the modular elements (3,16,20,21) by applying the means for connecting at the peripheral borders (4);
sealing the tray (1"') by applying an adhesive internally of the volume (5) at the lateral profile (7a) and at the peripheral borders (4) of the modular elements (3,16,20,21).

16. The assembly process of a modular self-supporting tray of claims from 1 to 12, **characterised in that** it comprises following stages:
resting a plurality of bottoms (21) on a horizontal plane to form a quadrangular edge;
fixing the plurality of centring bodies (7) at vertices of each bottom (21);
bringing four modular shells (3) and a plurality of modular walls (16) side-by-side to to define the volume (5), positioning the modular shells (3) at vertices of the quadrangular edge and the lateral walls (16) internally of the modular shells (3), positioning the respective housings (12) strikingly on the corresponding lateral profiles (7a) of the centring bodies (7) and the respective peripheral borders (4) in contact;
superiorly closing the tray (1"") by placing the plurality of covers (20) thereon, the covers (20) being in a same number as the bottoms (21);
blocking the modular elements (3,16,20,21) by applying the means for connecting at the peripheral borders (4);
sealing the tray (1 "') by applying an adhesive (8) internally of the volume (5) at the lateral profile (7a) and at the peripheral borders (4) of the modular elements (3,16,20,21).

17. A series of modular elements for formation of a self-supporting tray (1,1',1",1"',1"" ) for treating waste waters, **characterised in that** it comprises a modular shell (3) exhibitig a peripheral border (4) which is flanged and surrounds the modular shell (3), the shell (3) comprising:
a lateral flank (9) preferably having a curved transversal section;
an upper part (10), preferably spherical, exhibiting a base (10a) thereof which is inferiorly connected to the lateral flank (9) and an apex (10b) thereof which faces inwardly of the lateral flank (9);
a lower part (11), preferably truncoconical, exhibiting an upper side (11a) which is connected to the lateral flank (9) and a lower side (11b) which faces inwardly of the lateral flank (9), which lower part (11b) faces inwardly of the lateral flank (9).
